# EUROPÄISCHE PATENTSCHRIFT

(11) **EP 3 396 155 B1**
(45) Veröffentlichungstag und Bekanntmachung des Hinweises auf die Patenterteilung: **28.12.2022**
(21) Anmeldenummer: 18169780.6
(22) Anmeldetag: 27.04.2018
(51) Int. Cl.: F03D 1/06

(54) **ROTORBLATT EINER WINDENERGIEANLAGE, VERFAHREN ZUM HERSTELLEN EINES SOLCHEN UND VERWENDUNG EINES ABSCHLUSSSTEGS**
ROTOR BLADE OF A WIND TURBINE, METHOD FOR MANUFACTURING SAME, AND USE OF A TERMINATION BRIDGE
PALE DE ROTOR D'UNE ÉOLIENNE, PROCÉDÉ DE FABRICATION D'UNE TELLE PALE, ET UTILISATION D'UN ÉLÉMENT DE LIAISON

(30) Priorität: 27.04.2017 DE 102017004058
(43) Veröffentlichungstag der Anmeldung: 31.10.2018
(73) Patentinhaber: Siemens Gamesa Renewable Energy Service GmbH, 20097 Hamburg (DE)
(72) Erfinder: PREVITALI, Francesco, 22525 Hamburg (DE)
(74) Vertreter: Schlotter, Alexander Carolus Paul

(56) Entgegenhaltungen:
- EP-A1- 3 299 613
- EP-A1- 3 360 667
- WO-A1-2016/189051
- CN-A- 103 147 930
- CN-A- 104 696 167
- CN-U- 203 022 980
- US-A1- 2015 204 200
- US-A1- 2017 021 575

## Beschreibung

Die Erfindung betrifft ein Rotorblatt einer Windenergieanlage, wobei das Rotorblatt eine Vorderkante und eine Hinterkante aufweist und sich das Rotorblatt zwischen einer Blattwurzel und einer Blattspitze erstreckt, wobei das Rotorblatt eine Saugseitenschale und eine Druckseitenschale aufweist, welche sich beide zwischen der Blattwurzel und der Blattspitze erstrecken, wobei die Schalen an der Vorderkante und wenigstens teilweise an der Hinterkante verbunden sind, wobei das Rotorblatt des Weiteren einen Abschlusssteg aufweist, welcher zwischen der Saugseitenschale und der Druckseitenschale an der Hinterkante in einem Wurzelbereich des Rotorblatts angeordnet ist, wobei der Wurzelbereich die Blattwurzel einschließt, wobei der Abschlusssteg eine dicke Hinterkante des Rotorblatts in dem Wurzelbereich bereitstellt, und wobei der Abschlusssteg einen Klebeflansch mit einer Klebefläche aufweist, welche einer Innenfläche der Saugseitenschale oder der Druckseitenschale zugewandt ist.

Darüber hinaus betrifft die Erfindung die Verwendung eines Abschlussstegs.

Schließlich betrifft die Erfindung ein Verfahren zum Herstellen eines Rotorblatts einer Windenergieanlage, wobei das Rotorblatt eine Vorderkante und eine Hinterkante aufweist und sich das Rotorblatt zwischen einer Blattwurzel und einer Blattspitze erstreckt, wobei das Rotorblatt eine Saugseitenschale und eine Druckseitenschale aufweist, welche sich beide zwischen der Blattwurzel und der Blattspitze erstrecken, wobei das Rotorblatt durch Verbinden der Schalen an der Vorderkante und wenigstens teilweise an der Hinterkante hergestellt wird, und wobei das Rotorblatt des Weiteren einen Abschlusssteg aufweist, welcher zwischen der Saugseitenschale und der Druckseitenschale an der Hinterkante in einem Wurzelbereich des Rotorblatts angeordnet ist, wobei der Wurzelbereich die Blattwurzel einschließt, wobei der Abschlusssteg eine dicke Hinterkante des Rotorblatts in dem Wurzelbereich bereitstellt, und wobei der Abschlusssteg einen Klebeflansch mit einer Klebefläche aufweist, welche einer Innenfläche der Saugseitenschale oder der Druckseitenschale zugewandt ist.

Rotorblätter von Windenergieanlagen sind allgemein bekannt, z. B. aus CN 104 696 167 A. Viele Rotorblätter weisen eine dicke Rückseite im Wurzelbereich auf. Im Kontext dieser Beschreibung weist der Wurzelbereich den Rotorblattflansch auf, was bedeutet, dass sich der Wurzelbereich von dem Rotorblattflansch in die Richtung der Rotorblattspitze in zum Beispiel 10 oder 20 % der gesamten Rotorblattlänge erstreckt. Der Rotorblattflansch stellt eine Verbindungsfläche zu dem Rotorblattlager her, welcher wiederum mit der Rotornabe verbunden ist.

Die dicke Rückseite des Rotorblatts ist häufig als Abschlusssteg ausgebildet, welcher ein vorgefertigtes Bauteil sein kann, welches anschließend mit (ebenfalls vorgefertigten) Rotorblattschalen verbunden wird. Der Abschlusssteg erstreckt sich in dem Wurzelbereich. Jedoch ist es nicht notwendig, dass sich der Abschlusssteg in dem gesamten Wurzelbereich erstreckt. Zum Beispiel beginnt der Abschlusssteg an einem bestimmten Abstand von der Blattwurzel und endet an einem weiteren bestimmten Abstand von dem Ende des Wurzelbereichs. In dem Wurzelbereich ist das Rotorblatt im Allgemeinen während des Betriebs der Windenergieanlage hohen mechanischen Belastungen ausgesetzt. Somit muss die Verbindung zwischen dem Abschlusssteg und den Rotorblattschalen ebenfalls hohe Belastungen aushalten. Es ist deshalb erstrebenswert, eine robuste, zuverlässige und hochfeste Verbindung zwischen diesen Teilen zu haben.

Jedoch ist die Verbindung zwischen dem Abschlusssteg und den Rotorblattschalen anfällig für Herstellungsabweichungen. Dies geschieht oft aufgrund der Schwierigkeiten, wenn die Bauteile vor der abschließenden Montage des Rotorblatts positioniert werden. Es gibt im Wesentlichen zwei technische Ansätze, um den Abschlusssteg mit den Rotorblattschalen zu verbinden. Zum einen weist der Abschlusssteg Klebeflansche auf, welche mit den Innenflächen von beiden, der Saugseitenschale und der Druckseitenschale, mittels einer Klebepaste verbunden sind. Das Äußere dieser Verbindung ist durch Verwenden von Laminat aus Schichten, welche an der Außenseite des Rotorblatts angeordnet sind, verstärkt. Diese Ausgestaltung ist vorzugsweise für Verbindungen, welche einen Winkel von im Wesentlichen 90° zwischen den zwei verbundenen Teilen aufweisen, geeignet. Zum anderen sind die zwei Teile an ihrer Seitenfläche verbunden, was bedeutet, dass eine Stoßfuge ausgebildet ist. Wiederum wird die Außenseite der beiden Bauteile durch das Verwenden von zusätzlichen Laminaten verstärkt.

In Anbetracht dieses Standes der Technik ist es eine Aufgabe der Erfindung, ein Rotorblatt einer Windenergieanlage, einen Abschlusssteg für ein Rotorblatt einer Windenergieanlage, die Verwendung des Abschlussstegs und ein Verfahren zum Herstellen eines Rotorblatts einer Windenergieanlage bereitzustellen, wobei eine Verbindung zwischen dem Abschlusssteg und wenigstens einer der Rotorblattschalen verbessert wird. Insbesondere soll die Verbindung zwischen dem Abschlusssteg und der Rotorblattschale hochresistent gegenüber mechanischen Beanspruchungen sein, wobei eine robuste Ausgestaltung zur Verfügung gestellt werden soll, welche weiter vorzugsweise weniger empfindlich gegenüber Herstellungsabweichungen ist.

Die Aufgabe wird gelöst durch ein Rotorblatt einer Windenergieanlage gemäß Anspruch 1.

Im Kontext dieser Beschreibung weist ein Rotorblatt eine "dicke Hinterkante" auf, wenn das Blattprofil nicht mit einer scharfen Hinterkante endet. Das Rotorblatt weist einen dicken Endbereich auf. Dies bedeutet, dass ein Verhältnis der lokalen Blattdicke und der gesamten Sehnenlänge größer ist als 5 %. Die lokale Blattdicke ist die Entfernung zwischen der Saugseitenschale und der Druckseitenschale, wobei diese Dicke an einer Position von beispielsweise wenigstens 95 % der Sehnenlänge ermittelt wird. Die Sehnenlänge wird zwischen der Vorderkante und einem von der Vorderkante am weitesten entfernten Punkt ermittelt, gemessen entlang der Sehnenachse.

Das Rotorblatt weist einen Abschlusssteg mit einem Klebeflansch auf, welcher einerseits einfach herstellbar ist und andererseits hochresistent gegenüber mechanischen Beanspruchungen ist. Der Abschlusssteg kann auf einfache Weise und zuverlässig mit wenigstens einer der Rotorblattschalen fixiert oder verbunden werden, zum Beispiel mittels einer Klebepaste. Mit anderen Worten weist die Verbindung eine stabile und robuste Ausgestaltung auf. Der Abschlusssteg kann lediglich einen Klebeflansch oder zwei Klebeflansche aufweisen. Vorteilhafterweise weist der Abschlusssteg zwei Klebeflansche auf, welche auf beiden Seiten des Abschlussstegs angeordnet sind. Dies bedeutet, dass der Abschlusssteg zwei Klebeflansche aufweist, welche an gegenüberliegenden Seiten angeordnet sind.

Insbesondere erstreckt sich der wenigstens eine Klebeflansch in einer longitudinalen Richtung des Abschlussstegs. Der Abschlusssteg, welcher den Klebeflansch aufweist, kann in einem Querschnitt, der senkrecht zu der longitudinalen Richtung ist, als L geformt sein. Der Klebeflansch selbst ist ein Schenkel der L-geformten Struktur. Innerhalb dieses Kontexts kann der Klebeflansch eine Stirnfläche des Abschlussstegs einschließen, wobei diese Stirnseite einer Innenfläche der Rotorblattschale zugewandt ist. Der Winkel zwischen den beiden Schenkeln der L-geformten Struktur kann wenigstens etwa 90° sein, wobei er auch von den 90° abweichen kann. Zum Beispiel kann der Winkel zwischen den beiden Schenkeln der L-geformten Struktur bei Winkeln von 150° beginnen, es kann deshalb in einem Bereich von bis zu 60° von 90° abweichen, wobei der Winkel zwischen den zwei Schenkeln größer oder kleiner als 90° sein kann.

Die Faserschichten, welche über den Kern hinaus überstehen, können auf dem Kern laminiert sein. Ebenfalls ist es vorgesehen, dass die Faserschichten auf dem Kern angeordnet sind. Wenn das Rotorblatt abschließend montiert wird, beispielsweise mittels Harzinfusion, werden die Faserschichten auf dem Kern befestigt.

Der Kern ist beispielsweise aus einem typischen Kernmaterial hergestellt, welches häufig während der Herstellung von Rotorblättern verwendet wird. Dies ist zum Beispiel Schaumstoff oder Balsaholz. Die Faserschichten können Glas- oder Kohlefaserschichten mit einer unidirektionalen oder quer verlaufenden Orientierung sein. Eine Vielzahl von Faserschichten bildet ein Laminat.

Die Faserschichten, welche den Klebeflansch bilden, können Faserschichten sein, welche entweder an der Innenseite oder der Außenseite des Kerns des Abschlussstegs angeordnet sind. Zum Beispiel steht eine Faserschicht oder stehen mehrere Faserschichten, welche an der Außenseite des Kerns angeordnet ist/sind, über den Kern hinaus und bildet/bilden einen Teil des Klebeflanschs. Dasselbe ist gültig für die Faserschichten, welche an der Innenseite des Kerns angeordnet sein können. Es ist ebenfalls vorgesehen, dass der Klebeflansch mittels Faserschichten gebildet wird, welche auf beiden Seiten des Kerns angeordnet sind.

In einer vorteilhaften Ausgestaltung der Erfindung ist ein Verstärkungsbauteil mit dem Abschlusssteg und dem Klebeflansch in der Art verbunden, sodass es einem Inneren des Rotorblatts zugewandt ist. In einer Ausgestaltung der Erfindung ist das Verstärkungsbauteil eine zusätzliche Faserschicht, welche sich an einer Innenfläche des Abschlussstegs und des Klebeflanschs erstreckt. Eine zusätzliche Faserschicht ist einfach herzustellen und stellt eine effiziente Verstärkung der Verbindung zwischen den beiden Bauteilen dar.

In einer weiteren vorteilhaften Ausgestaltung der Erfindung ist das Verstärkungsbauteil ein Stegfüller, welcher in einer Ecke zwischen einer Innenfläche des Abschlussstegs und einer Innenfläche des Klebeflanschs angeordnet ist. Insbesondere erstreckt sich wenigstens eine weitere zusätzliche Faserschicht an einer Innenfläche des Abschlussstegs, an einer Innenfläche des Stegfüllers und an einer Innenfläche des Klebeflanschs. Diese weitere(n) zusätzliche(n) Faserschicht(en) bildet/bilden vorzugsweise einen Teil des Verstärkungsbauteils. Wiederum kann der Stegfüller auf den weiteren Bauteilen laminiert sein oder er kann auf den Bauteilen angeordnet sein. Der Stegfüller kann mit weiteren Bauteilen während des abschließenden Herstellungsvorgangs des Rotorblatts verbunden sein, zum Beispiel während der Harzinfusion.

Der Stegfüller kann in einem Querschnitt, welcher im Wesentlichen senkrecht zu der longitudinalen Achse des Abschlussstegs ist, eine der folgenden Formen aufweisen. Zum Beispiel kann der Stegfüller die Form eines Dreiecks, eines rechtwinkligen Dreiecks oder eines gleichschenkligen Dreiecks haben. Jedes rechtwinklige Dreieck besteht aus zwei Schenkeln und einer Hypotenuse. Mit dieser Berücksichtigung kann der Stegfüller die Form eines Dreiecks mit runden Ecken an der Verbindungsstelle der beiden Schenkel haben. Des Weiteren kann der Stegfüller die Form eines Dreiecks mit einer gebogenen Hypotenuse aufweisen, zum Beispiel einer konkav oder konvex gebogenen Hypotenuse. Darüber hinaus kann die Hypotenuse eine polygonale Kette sein, welche zum Beispiel konkav oder konvex gebogen ist.

Der Stegfüller kann mit einer zusätzlichen Faserschicht zum Verhindern einer Ablösung bedeckt sein. Der Stegfüller kann einerseits ein vorgefertigtes Element (mit oder ohne der/den Abdeckungsschicht(en)) sein oder er kann durch Verwenden von zum Beispiel Klebepaste hergestellt sein, welche direkt auf dem gehärteten Fuß zwischen den beiden Bauteilen aufgetragen wird. Der Stegfüller kann ebenfalls aus Kernmaterial hergestellt sein, welches zum Beispiel Schaumstoff, Balsaholz, Schichtholz oder Harz (mit oder ohne verstärkten Fasern) ist. Der Stegfüller erlaubt an der Verbindung zwischen dem Klebeflansch und dem Abschlusssteg eine Verringerung der Belastung.

In einer weiteren Ausgestaltung der Erfindung weist der Abschlusssteg wenigstens eine Endpunktfaserverstärkungsschicht auf, welche sich um einen Kantenteil des Kerns erstreckt. Der Kantenteil weist eine Stirnseite auf, welche einer Innenfläche der Saugseitenschale oder der Druckseitenschale zugewandt ist.

Zum Beispiel ist eine Endpunktfaserverstärkungsschicht eine der Faserschichten, die einen Teil eines Inneren oder äußeren Laminats bilden, welche auf dem Kern laminiert oder angeordnet sind. Eine Faserschicht, welche an der Innenseite oder der Außenseite des Kerns laminiert oder angeordnet ist, erstreckt sich um den Kantenteil des Kerns zu der gegenüberliegenden Seite des Kerns. Es ist ebenfalls möglich, dass die Endpunktfaserverstärkungsschicht eine zusätzliche Faserschicht ist. Diese zusätzliche Schicht ist als U-geformte Aussparung ausgebildet, in welcher der Kern (aufweisend weitere Faserschichten oder aufweisend keine weiteren Faserschichten) angeordnet ist.

In einer weiteren vorteilhaften Ausgestaltung weist der Kern abgerundete Ecken an wenigstens der Stirnfläche auf, welche der Verbindung zwischen dem Abschlusssteg und der Innenfläche der Rotorblattschalen zugewandt ist. Die abgerundeten Ecken verhindern Spitzen in der mechanischen Beanspruchungsverteilung an der Verbindung der Bauteile. Die Lücke, welche aus den abgerundeten Ecken resultiert, kann zum Beispiel mit faserigen Strähnen gefüllt werden. Es ist ebenfalls möglich, die Lücke leer zu lassen. Die Lücke kann später während des Harzinfusionsprozesses gefüllt werden. Die Endpunktfaserverstärkungsschicht kann auf dem Kern laminiert werden oder der Kern kann in diese Schicht gewickelt werden. Wiederum kann eine Verbindung zwischen den Schichten und dem Kern während der späteren Harzimprägnierung oder -infusion des Rotorblatts eingerichtet werden.

Gemäß der Erfindung weist wenigstens die Saugseitenschale und/oder die Druckseitenschale einen Hinterkantenfüller auf, welcher wenigstens teilweise eine geometrische Kontur einer Verbindungsfläche der Schale definiert. Die Verbindungsfläche ist eine Fügefläche mit der Klebefläche des Klebeflanschs in der Verbindung zwischen dem Abschlusssteg und der Schale.

Der Hinterkantenfüller ist direkt benachbart zum Kern oder zum Kernlaminat der Rotorblattschale angeordnet.

Der Hinterkantenfüller erlaubt die Verbesserung der Qualität der Fügefläche, um einerseits die Form der Kontaktfläche zum Klebeflansch des Abschlussstegs zu steuern oder um die Ausrichtung und/oder die Geometrie der zwei Bauteile zu steuern. Der geformte Hinterkantenfüller kann direkt neben dem Sandwichkern oder, in Abhängigkeit der Ausgestaltung des Rotorblatts, an einem weiteren vorgefertigten strukturellen Kernbauteil, zum Beispiel einem Gurt, angeordnet sein. Der Hinterkantenfüller ist beispielsweise durch wenigstens eine Faserschicht bedeckt. Die Form des Hinterkantenfüllers kann derart sein, dass die gewünschte Schnittstellengeometrie erreicht wird. Weitere Verbesserungen, zum Beispiel ein Beschneiden, kann nötig sein, um überschüssiges Laminat zu entfernen, um eine gewünschte Oberflächenform oder Klebelücke zu erreichen.

Durch Verwenden des Hinterkantenfüllers kann die benötigte Masse an Klebepaste reduziert werden und die Qualität der Fügeflächen signifikant verbessert werden. Des Weiteren kann ein Beschneiden von zum Beispiel des Gurts oder eines anderen Kernmaterials vermieden werden. Vorteilhafterweise wird weder der Kern noch der Gurt während des Beschneidens beschädigt oder gefährdet, auch wenn Abweichungen in der Positionierung des Abschlussstegs oder der Schale stattfinden.

Nicht beansprucht ist ein Abschlusssteg eines Rotorblatts einer Windenergieanlage, wobei das Rotorblatt eine Vorderkante und eine Hinterkante aufweist und sich das Rotorblatt zwischen einer Blattwurzel und einer Blattspitze erstreckt, wobei das Rotorblatt eine Saugseitenschale und eine Druckseitenschale aufweist, welche sich beide zwischen der Blattwurzel und der Blattspitze erstrecken, wobei die Schalen an der Vorderkante und wenigstens teilweise an der Hinterkante verbunden sind, wobei der Abschlusssteg dazu eingerichtet ist, zwischen der Saugseitenschale und der Druckseitenschale an der Hinterkante in einem Wurzelbereich des Rotorblatts angeordnet zu sein, wobei der Wurzelbereich die Blattwurzel einschließt, wobei der Abschlusssteg eine dicke Hinterkante des Rotorblatts in dem Wurzelbereich bereitstellt, wobei der Abschlusssteg einen Klebeflansch mit einer Klebefläche aufweist, welche einer Innenfläche der Saugseitenschale oder der Druckseitenschale zugewandt ist, wobei der Abschlusssteg weiter verbessert wird, sodass der Abschlusssteg ein Faserverbundteil mit einem Kern und Faserschichten, welche sich entlang der Oberfläche des Kerns erstrecken, ist, wobei ein Teil der Faserschichten über den Kern hinaus übersteht und den Klebeflansch bildet.

Gleiche oder ähnliche Vorteile, welche mit Bezug auf das Rotorblatt der Windenergieanlage genannt wurden, treffen auf den Abschlusssteg in gleicher oder ähnlicher Weise zu. Diese werden nicht explizit erwähnt, um Wiederholungen zu vermeiden. Der Abschlusssteg kann durch Merkmale, welche mit Bezug auf das Rotorblatt genannt wurden, verbessert werden. Solche Kombinationen spiegeln insbesondere weitere Ausgestaltungen des Abschlussstegs wider.

Die Aufgabe wird ebenfalls durch die Verwendung eines Abschlussstegs gemäß Anspruch 6 gelöst. Ebenfalls mit Bezug auf die Verwendung eines Abschlussstegs gelten gleiche oder ähnliche Vorteile, welche in Bezug auf das Rotorblatt genannt wurden, in gleicher oder ähnlicher Weise und werden daher nicht wiederholt.

Die Aufgabe wird ebenfalls durch ein Verfahren zur Herstellung eines Rotorblatts einer Windenergieanlage gemäß Anspruch 7 gelöst.

Gleiche oder ähnliche Vorteile, welche mit Bezug auf das Rotorblatt genannt wurden, gelten ebenfalls für das Verfahren gemäß Aspekten der Erfindung und werden nicht wiederholt.

In einer vorteilhaften Ausgestaltung der Erfindung wird eine Verbindung zwischen dem Abschlusssteg und dem Klebeflansch durch Anordnen eines Verstärkungsbauteils auf dem Abschlusssteg und des Klebeflanschs verstärkt, indem es dem Inneren des Rotorblatts zugewandt ist.

Des Weiteren kann die Verbindung zwischen dem Abschlusssteg und dem Klebeflansch durch Anordnen einer zusätzlichen Faserschicht, welche sich an der Innenfläche des Abschlussstegs und des Klebeflanschs erstreckt, verstärkt werden. Diese zusätzliche Schicht kann an der Innenfläche des Klebeflanschs und des Abschlussstegs laminiert oder angeordnet werden.

In einer weiteren vorteilhaften Ausgestaltung der Erfindung wird die Verbindung zwischen dem Abschlusssteg und dem Klebeflansch durch Anordnen eines Stegfüllers zwischen einer Innenfläche des Abschlussstegs und einer Innenfläche des Klebeflanschs verstärkt. Insbesondere kann eine weitere zusätzliche Faserschicht an einer Innenfläche des Abschlussstegs, an einer Innenfläche des Stegfüllers und an einer Innenfläche des Klebeflanschs angeordnet werden.

Es ist des Weiteren vorteilhaft, dass der Abschlusssteg ein Faserverbundteil mit einem Kern ist. Die wenigstens eine Endpunktfaserverstärkungsschicht ist derart angeordnet, dass sie sich um einen Kantenteil des Kerns herum erstreckt. Der Kantenteil weist eine Stirnfläche auf, welcher einer Innenfläche der Saugseitenschale oder der Druckseitenschale zugewandt ist.

Erfindungsgemäß ist bei dem Verfahren vorgesehen, dass ein Hinterkantenfüller in wenigstens der Saugseitenschale und/oder der Druckseitenschale angeordnet ist, sodass er wenigstens teilweise eine geometrische Kontur einer Verbindungsfläche der Schale definiert. Die Verbindungsfläche ist eine Fügefläche mit einer Klebefläche auf dem beflansch in der Verbindung zwischen dem Abschlusssteg und der Schale.

Weitere Merkmale der Erfindung werden durch die Beschreibung der Ausgestaltungen gemäß der Erfindung zusammen mit den Ansprüchen unter Einbeziehung der Figuren ersichtlich. Die Erfindung wird nachfolgend ohne Einschränkung der allgemeinen Intention der Erfindung auf Grundlage von exemplarischen Ausgestaltungen beschrieben, wobei ausdrücklich Bezug auf die Zeichnungen hinsichtlich der Offenbarung aller Merkmale gemäß der Erfindung, die nicht explizit in größerem Detail in dem Text genannt werden, genommen wird. Die Zeichnungen zeigen in:
- Fig. 1: eine Windenergieanlage in einer vereinfachten Frontdarstellung,
- Fig. 2: eine vereinfachte perspektivische Ansicht eines Rotorblatts mit einer dicken Hinterkante,
- Fig. 3a bis 3c: detaillierte vereinfachte Querschnittsansichten eines Abschlussstegs aufweisend einen Klebeflansch,
- Fig. 4: einen vereinfachten Querschnitt durch einen Abschlusssteg aufweisend einen Klebeflansch, weiter aufweisend einen Stegfüller, der in einer Kante zwischen der Innenfläche des Abschlussstegs und einer Innenfläche des Klebeflanschs angeordnet ist,
- Fig. 5a bis 5c: Schritte eines Verfahrens zum Herstellen eines Abschlussstegs aufweisend einen Klebeflansch und einen Stegfüller,
- Fig. 6a bis 6f: vereinfachte Querschnittsansichten von verschiedenen Stegfüllern,
- Fig. 7a bis 7c: vereinfachte detaillierte Querschnittsansichten von einem Abschlusssteg mit einem Kernelement mit runden Ecken,
- Fig. 8a bis 8c: vereinfachte detaillierte Querschnittsansichten auf die Verbindung zwischen dem Abschlusssteg und einer Rotorblattschale (Fig. 8a) und zwei verschiedene Anordnungen einer Rotorblattschale (Fig. 8b und 8c), wobei die Rotorblattschalen jeweils einen Hinterkantenfüller aufweisen,
- Fig. 9: eine weitere vereinfachte Querschnittsansicht, welche die Verbindung zwischen einer Rotorblattschale und einem Abschlusssteg darstellt, und
- Fig. 10a und 10b: vereinfachte detaillierte Querschnittsansichten, welche eine Verbindung zwischen einem Abschlusssteg und einer Rotorblattschale gemäß dem Stand der Technik darstellen.

In den Zeichnungen werden gleiche oder ähnliche Typen von Elementen oder entsprechenden korrespondierenden Teilen mit den gleichen Bezugszeichen benannt, um ein erneutes Einführen des Gegenstands zu verhindern.

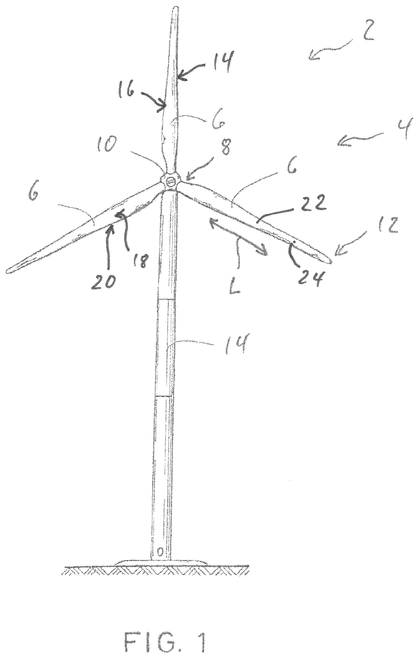

In Fig. 1 ist eine Windenergieanlage 2 mit einem Rotor 4 dargestellt, welcher beispielhaft drei Rotorblätter 6 aufweist. Die Rotorblätter 6 erstrecken sich zwischen einer Blattwurzel 8 und einer Blattspitze 12 in einer longitudinalen Richtung L. An der Blattwurzel 8 sind die Rotorblätter 6 mit einer Rotorblattnabe 10 verbunden. Jedes Rotorblatt 6 weist eine Vorderkante 14 und eine Hinterkante 16, eine Druckseite 18 und eine Saugseite 20 auf, wobei letztgenannte in der Darstellung der Fig. 1 abgewandt ist. Die Rotorblätter 6 sind aus Rotorblattschalen hergestellt, nämlich einer Druckseitenschale 22 und einer Saugseitenschale 24. Lediglich die Saugseitenschale 22 ist in Fig. 1 ersichtlich. Beide Rotorblattschalen 22, 24 erstrecken sich zwischen der Blattwurzel 8 und der Blattspitze 12. Die Rotorblattschalen 22, 24 sind an der Vorderkante 14 verbunden, welche dem Wind während der Rotation des Rotors 4 ausgesetzt ist. Das Rotorblatt 6 hat ein dickes Rückseitenprofil in einem Wurzelbereich. Außerhalb des Wurzelbereichs sind die Rotorblattschalen 22, 24 direkt mit der Vorderkante 14 und der Hinterkante 16 verbunden. In dem Wurzelbereich weist das Rotorblatt 6 einen Abschlusssteg 30 auf, welcher zwischen den Rotorblattschalen 22, 24 angeordnet ist und die dicke Rückseite bildet.

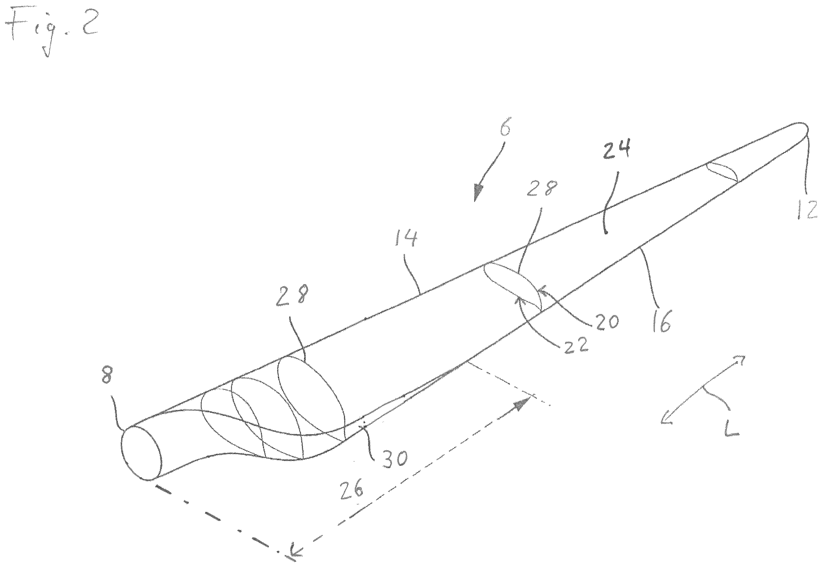

In Fig. 2 ist eine vereinfachte perspektivische Ansicht eines Rotorblatts 6 mit einer dicken Hinterkante in dem Wurzelbereich 26 dargestellt. Der Wurzelbereich 26 erstreckt sich zum Beispiel in 10 % oder 20 % der maximalen Länge des Rotorblatts 6, wobei der Wurzelbereich 26 an der Blattwurzel 8 beginnt und sich in Richtung zu der Blattspitze 12 erstreckt. In dem Wurzelbereich 26 weist das Rotorblatt 6 ein Rotorblattprofil 28 auf, welches an der Hinterkante 16 dick ist. Das Rotorblattprofil 28 ändert sich kontinuierlich in Richtung der Blattspitze 12. Außerhalb des Wurzelbereichs 26 hat es eine scharfe oder spitzwinklige Hinterkante 16.

Der dicke Hinterkantenteil des Rotorblatts 6 in dem Wurzelbereich 26 wird durch einen Abschlusssteg 30 gebildet. Der Abschlusssteg 30 ist zwischen der Saugseitenschale 24 und der Druckseitenschale 22 an der Hinterkante 16 des Rotorblatts 6 in dem Wurzelbereich 26 angeordnet. Es ist nicht notwendig, dass sich der Abschlusssteg 30 entlang der gesamten Länge des Wurzelbereichs 26 erstreckt. Zum Beispiel kann der Abschlusssteg 30 an einem Abstand von der Blattwurzel 8 beginnen, an welchem das Profil von einem runden Profil zu einem Profil mit einer dicken Hinterkante 16 übergeht.

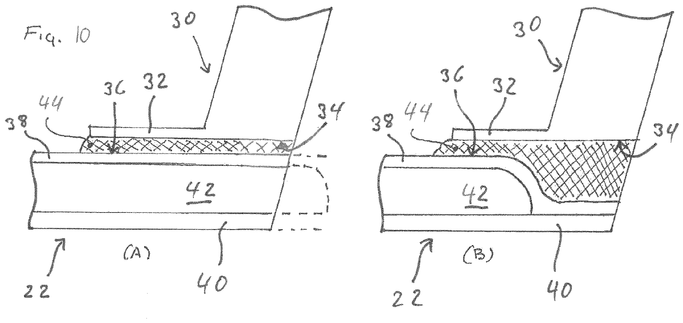

**Fig. 10** stellt eine vereinfachte Querschnittsansicht einer Verbindung zwischen dem Abschlusssteg 30 und einer der Rotorblattschalen 22, 24 dar. Beispielhaft wird auf die Verbindung des Abschlussstegs 30 mit der Druckseitenschale 22 Bezug genommen. Fig. 10 stellt die Situation gemäß dem Stand der Technik dar.

Der Abschlusssteg 30 weist einen Klebeflansch 32 mit einer Klebefläche 34 auf, welche einer Innenfläche 36 der Druckseitenschale 22 zugewandt ist. Die Druckseitenschale 22 beinhaltet ein inneres Laminat 38 und ein äußeres Laminat 40 und ein zentrales Element, zum Beispiel einen Hinterkantengurt 42, welcher zwischen den Laminaten 38, 40 angeordnet ist. Der Klebeflansch 32 des Abschlussstegs 30 ist mit der Innenfläche 36 der Druckseitenschale 22 mittels einer Klebepaste 44 verklebt. Ein präzises Positionieren des Abschlussstegs 30 während des Herstellens des Rotorblatts 6 ist oftmals schwierig zu erreichen, weshalb ein Beschneiden von strukturellen oder sensiblen Teilen der Schale vorkommen kann. Dies wird durch die gestrichelten Linien in Fig. 10a angezeigt. Um einen weichen Übergang zwischen der Druckseitenschale 22 und dem Abschlusssteg 30 zu erreichen, müssen der Gurt 42 und die Laminate 38, 40 beschnitten werden. Der entfernte Teil wird hierbei durch die gestrichelten Linien angezeigt. Ein Beschneiden ist jedoch nicht erwünscht, da es ein kostenintensiver und zeitaufwändiger Arbeitsschritt während der Herstellung des Rotorblatts 6 ist und es möglicherweise die Belastungsfähigkeit des Rotorblatts 6 reduziert.

In Fig. 10b ist ein weiteres Beispiel einer Verbindung zwischen einem Abschlusssteg 30 und einer Druckseitenschale 22 dargestellt. Gegensätzlich zu der Situation, welche in Fig. 10a dargestellt ist, ist der Abschlusssteg 30 nicht zu sehr innenliegend angeordnet, jedoch etwas zu weit nach außen. Aufgrund der Form der Innenfläche 26 der Druckseitenschale 22 in diesem Bereich war es nötig, eine große Menge von Klebepaste 24 für diese Verbindung aufzutragen. Dies ist unerwünscht, da der ausgiebige Gebrauch von Klebepaste 44 unwirtschaftlich ist. Des Weiteren kann es Fertigungsprobleme verursachen, zum Beispiel aufgrund von exothermen Reaktionen, und/oder kann die Toleranz von maximalen Klebelücken verletzen.

Die folgenden Darstellungen gehören zu Ausgestaltungen der Erfindung.

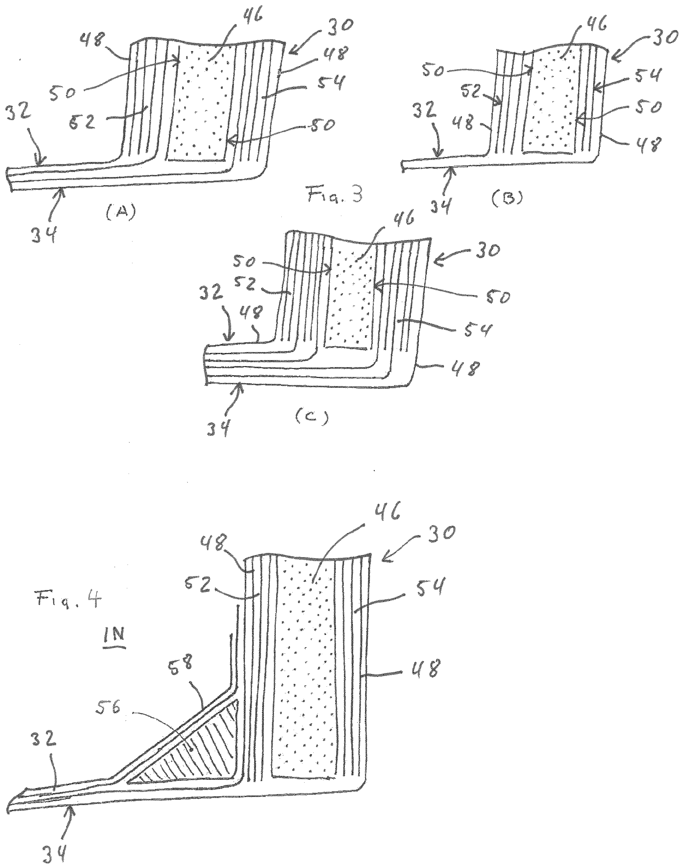

In den Fig. 3a bis 3c sind detaillierte vereinfachte Querschnittsansichten eines Abschlussstegs mit einem Klebeflansch dargestellt. Der Abschlusssteg 30 ist ein Faserverbundteil, welches einen Kern 46 und Faserschichten 48, welche sich an der Oberfläche 50 des Kerns 46 erstrecken, aufweist. Der Kern 46 ist aus einem typischen Kernmaterial gefertigt, welches häufig während der Herstellung eines Rotorblatts 6 verwendet wird, zum Beispiel Schaumstoff oder Balsaholz. Ein Teil der Faserschichten 48, welche auf den Kern 46 aufgetragen werden, erstrecken sich über den Kern 46 hinaus und bilden einen Klebeflansch 32.

In Fig. 3a sind die Faserschichten 48, welche den Klebeflansch 32 bilden, die innerste und die äußerste Faserschicht 48 von beiden, einem inneren Laminat 52 und einem äußeren Laminat 54, welche auf gegenüberliegenden Oberflächen 50 des Kerns 46 aufgetragen werden. In Fig. 3b stehen die innerste Faserschicht 48 und die äußerste Faserschicht 48 des inneren Laminats 52 und des äußeren Laminats 54 entsprechend über den Kern 46 hinaus und bilden den Klebeflansch 32. In Fig. 3c stehen einige der Faserschichten 48, welche das innere Laminat 52 bilden, und einige der Faserschichten 48, welche das äußere Laminat 54 bilden, über den Kern 46 hinaus und bilden den Klebeflansch 32. Beispielhaft steht jede dritte Faserschicht 48, welche das innere Laminat 52 bildet, über den Kern 46 hinaus und bildet einen Teil des Klebeflanschs 32. Die äußere Schicht 54 weist Faserschichten 48 auf, welche über den Kern 46 hinaus überstehen, welche ebenfalls beispielhaft lediglich jede zweite oder jede dritte Faserschicht 48 sind. Im Kontext dieser Beschreibung bedeutet das Merkmal, gemäß welchem die Faserschichten 48 über den Kern 46 hinaus überstehen, dass die Faserschichten 48 sich entlang der Seitenflächen 50 des Kerns 46 erstrecken und eine Länge aufweisen, welche größer ist als die des Kerns 46 in der Richtung, welche in den Fig. 3a bis 3c vertikal ist. Diese Richtung ist senkrecht zu der longitudinalen Richtung L des Rotorblatts 6 (s. Fig. 2).

In Fig. 4 ist eine detaillierte vereinfachte Querschnittsansicht des Abschlussstegs 30 und des Klebeflanschs 32, aufweisend einen Stegfüller 56, dargestellt. Der Stegfüller 56 ist in der Ecke zwischen einer Innenfläche des Abschlussstegs 30, an welchem das innere Laminat 52 angeordnet ist, und einer Innenfläche des Klebeflanschs 32, welcher von der Klebefläche 34 abgewandt ist, angeordnet ist. Innerhalb des Kontexts dieser Beschreibung ist eine Innenfläche einem Inneren IN des Rotorblatts 6 zugewandt. Der Stegfüller 56 kann aus einem Kernmaterial hergestellt sein, welches zum Beispiel Schaumstoff, Balsaholz oder Klebepaste ist. Optional ist dort eine zusätzliche Faserschicht 58 (oder eine Vielzahl davon), welche an einer Innenfläche des Abschlussstegs 30, an einer Innenfläche des Stegfüllers 56 und an einer Innenfläche des Klebeflanschs 32 angeordnet ist (sind). Der Stegfüller 56 stellt zusammen mit der optionalen zusätzlichen Faserschicht 58 ein Verstärkungsbauteil dar. Gemäß einer weiteren Ausgestaltung, welche nicht dargestellt ist, ist lediglich eine zusätzliche Faserschicht vorhanden, welche sich lediglich entlang der Innenfläche des Abschlussstegs 30 und der Innenfläche des Klebeflanschs 32 erstreckt. Diese zusätzliche Faserschicht erstreckt sich nicht entlang der Innenfläche des Stegfüllers 56. Selbstverständlich können beide Optionen vorteilhaft kombiniert werden, was bedeutet, dass eine zusätzliche Faserschicht an der Oberfläche des Abschlussstegs 30 und des Klebeflanschs 32 angeordnet ist, und an der Oberfläche von diesen der Stegfüller 56, welcher die optionale(n) zusätzliche(n) Faserschicht(en) 58 aufweist, angeordnet ist. Alle diese Ausgestaltungen verstärken die Verbindung zwischen dem Klebeflansch 32 und dem Abschlusssteg 30.

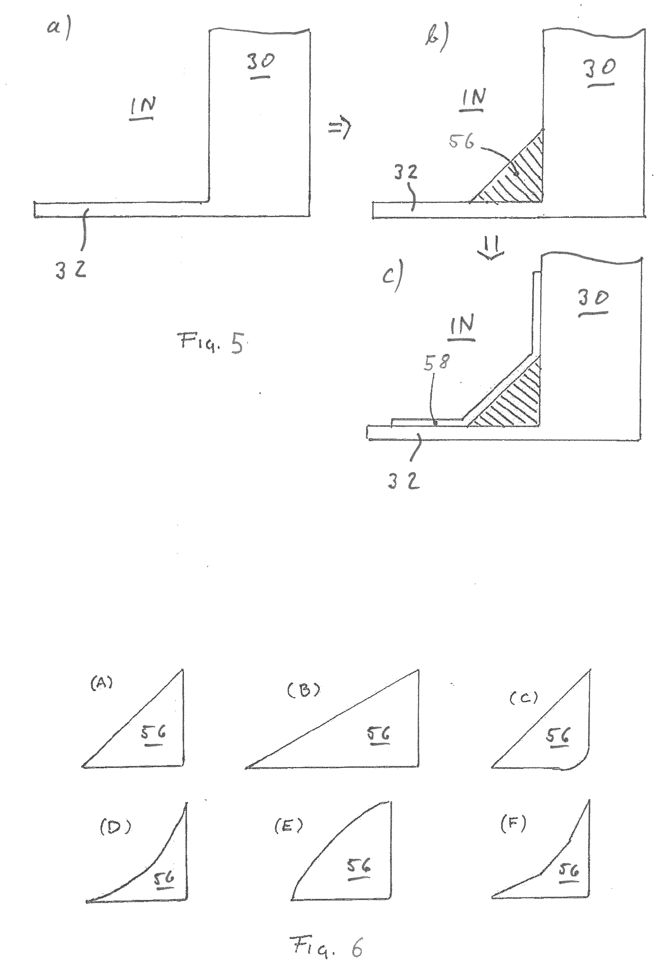

In den Fig. 5a bis 5c sind verschiedene Schritte eines Verfahrens zum Herstellen eines Abschlussstegs 30, welcher einen Klebeflansch 32 und den Stegfüller 55 aufweist, dargestellt.

Zunächst wird ein Abschlusssteg 30, welcher einen Klebeflansch 32 aufweist, bereitgestellt. Dieser Abschlusssteg 30 ist zum Beispiel hergestellt, wie es in einem der Fig. 3a bis 3c dargestellt ist (gezeigt in Fig. 5a). Anschließend wird der Stegfüller 56 in der Ecke zwischen dem Abschlusssteg 30 und dem Klebeflansch 32 angeordnet (gezeigt in Fig. 5b). Der Stegfüller 56 kann in der Ecke zur späteren Verbindung mit anderen Teilen angeordnet sein, zum Beispiel während einer Harzinfusion des Rotorblatts 6, oder er kann mit den jeweiligen Innenflächen des Abschlussstegs 30 und des Klebeflanschs 32 verklebt oder als Paste verschmiert werden. Abschließend wird die weitere zusätzliche Faserschicht 58 an der Innenfläche des Klebeflanschs 32, dem Abschlusssteg 30 und dem Stegfüller 56 angeordnet (wie in Fig. 5c gezeigt). Wiederum kann die weitere zusätzliche Faserschicht 58 an dem bevorzugten Platz zur späteren Harzinfusion angeordnet werden oder sie kann mit den jeweiligen Oberflächen verklebt werden.

Fig. 6a bis 6f stellen verschiedene vereinfachte Querschnittsansichten von verschieden geformten Stegfüllern 56 dar. Der Stegfüller 56, unter Berücksichtigung in der gezeigten Querschnittsansicht, welche im Wesentlichen senkrecht zu der longitudinalen Richtung des Abschlussstegs 30 ist, kann eine oder mehrere der folgenden Formen aufweisen. Der Stegfüller kann die Form eines gleichschenkligen Dreiecks (Fig. 6a), eines rechtwinkligen Dreiecks (Fig. 6b) oder eines rechtwinkligen Dreiecks mit runden Ecken an den Verbindungsstellen der zwei Schenkel (Fig. 6c) aufweisen. Der Stegfüller 56 kann eine konkav gebogene Hypotenuse (Fig. 6d) oder eine konvex gebogene Hypotenuse (Fig. 6e) aufweisen. Darüber hinaus kann die Hypotenuse eine polygonale Kette sein (Fig. 6f), welche zum Beispiel konkav geformt (wie dargestellt) oder welche konvex geformt ist. Ein Stegfüller 56, welcher rund geformt ist, ist insbesondere vorteilhaft für die Vermeidung von Spitzen in der Lastverteilung.

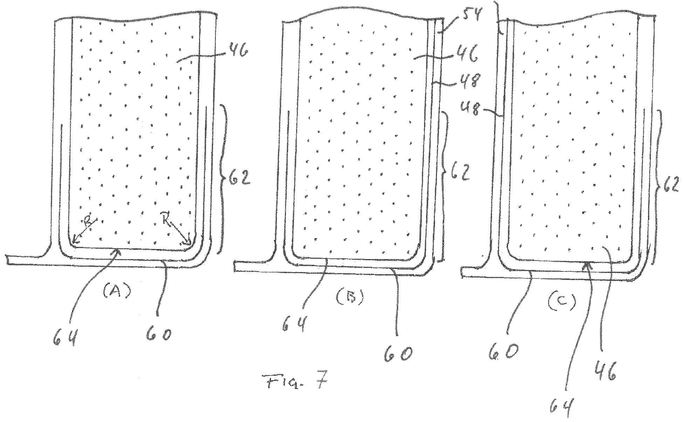

In Fig. 7a bis 7c sind vereinfachte detaillierte Querschnittsansichten dargestellt, welche ein Kernbauteil 46 eines Abschlussstegs 30 mit runden Ecken zeigen. Beispielhaft ist der Radius der gebogenen Ecken mit R bezeichnet. Zusätzlich zudem weist der Abschlusssteg 30 wenigstens eine Endpunktfaserverstärkungsschicht 60 auf, welche sich um den Kantenteil 62 des Kerns herum erstreckt. In Fig. 7a ist die Endpunktfaserverstärkungsschicht 60 eine zusätzliche Schicht, welche laminiert oder um den Kantenteil 62 des Kernelements 46 herumgewickelt ist. In Fig. 7b ist die Endpunktfaserverstärkungsschicht 60 durch eine Faserschicht 48 geformt, welche ein Teil des äußeren Laminats 54 ist. Diese spezielle Faserschicht 48 ist um den Kantenteil 62 des Kernelements 46 in dem Kantenteil 62 gewickelt. In Fig. 7c ist eine weitere Ausgestaltung dargestellt, in welcher eine Faserschicht 48, welche einen Teil des inneren Laminats 52 bildet, um den Kantenteil 62 des Kerns 46 gewickelt. In all diesen Ausgestaltungen erstreckt sich die Endpunktfaserverstärkungsschicht 60 um die Stirnfläche 64 des Kerns 46 herum, wobei diese Stirnfläche 64 einer Innenfläche 36 (s. Fig. 10) der Druckseitenschale 22 oder der Saugseitenschale 24 jeweils gegenüberliegt. Vorteilhafterweise verhindern die rund geformten Ecken des Kerns 46 Spitzen in der Lastverteilung.

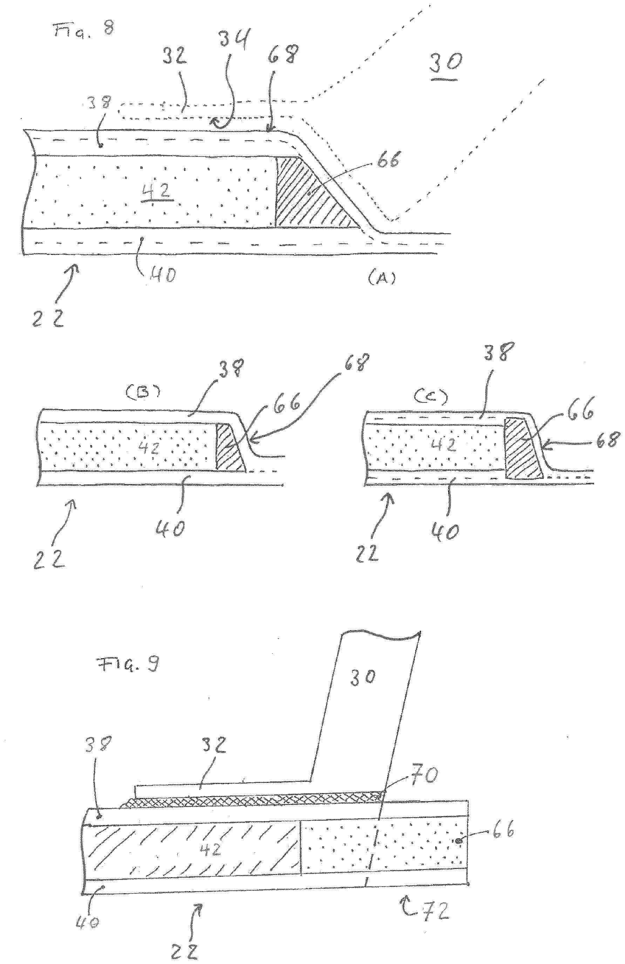

Fig. 8a bis 8c zeigen vereinfachte Querschnittsansichten einer Verbindung zwischen dem Abschlusssteg 30 und einer Rotorblattschale 22, 24. Lediglich beispielhaft wird in den folgenden Ausgestaltungen auf die Druckseitenschale 22 Bezug genommen. Die Druckseitenschale 22 weist einen Hinterkantenfüller 66 auf, welcher wenigstens teilweise eine geometrische Kontur einer Verbindungsfläche 68 der Druckseitenschale 22 definiert. Die Verbindungsfläche 68 ist die Fügefläche mit der Klebefläche 34 des Klebeflanschs 32 in der Verbindung zwischen dem Abschlusssteg 30 und der Druckseitenschale 22. Innerhalb des Kontexts dieser Beschreibung weist die Klebefläche 34 nicht nur die Oberfläche, welche ein Teil des Klebeflanschs 32 ist, sondern auch die Oberfläche auf, welche an dem unteren Ende des Abschlussstegs 30 angeordnet ist, welche mit der Rotorblattschale 22, 24 verbunden ist.

In der Ausgestaltung von Fig. 8a ist der Hinterkantenfüller 66 direkt benachbart zu dem Hinterkantengurt 42 angeordnet. Der Hinterkantengurt 42 bildet ein Kernlaminat der Rotorblattschale 22. Der Hinterkantenfüller 66 ist zwischen einem äußeren Laminat 40 und einem inneren Laminat 38 angeordnet. In Fig. 8b ist eine weitere Ausgestaltung gezeigt, welche die Druckseitenschale 22 darstellt, welche ein inneres Laminat 38 und ein äußeres Laminat 40 aufweist, wobei eine Neigung des Hinterkantenfüllers 66, welcher die geometrische Kontur einer Verbindungsfläche 68 definiert, größer ist als die der Ausgestaltung in Fig. 8a. Durch Verändern der Neigung des Hinterkantenfüllers 66 kann ein Winkel zwischen der Rotorblattschale 22 und dem Abschlusssteg 30 variiert werden. Des Weiteren veläuft gemäß Fig. 8a lediglich ein Teil der Schichten des inneren und des äußeren Laminats 38, 40, welche auf dem Kernlaminat der Rotorblattschale 22 verlaufen, in diagonaler Richtung. In Fig. 8c ist eine weitere andere Ausgestaltung, welche eine Druckseitenschale 22 zeigt, welche einen Hinterkantenfüller 66 aufweist, welcher über den Hinterkantengurt 42 hinaus in der Richtung einer Dicke von diesem Bauteil übersteht. Die Schichten des inneren und des äußeren Laminats 38, 40 sind in diagonaler Richtung fortgesetzt.

Fig. 9a ist eine weitere vereinfachte Querschnittsansicht, welche ein Detail einer Verbindung zwischen einer Rotorblattschale 22, 24 und einem Abschlusssteg 30 darstellt. Beispielhalber wird auf die Druckseitenschale 22 Bezug genommen. Ein Hinterkantenfüller 66 ist direkt benachbart zu einem Hinterkantengurt 42 angeordnet; der Hinterkantenfüller 66 ist zwischen dem inneren Laminat 30 und dem äußeren Laminat 40 eingebettet. Der Abschlusssteg 30 ist auf der Rotorblattschale 22 angeordnet und ist auf der Rotorblattschale mittels einer Klebepaste 70 fixiert. Da die Anpassung des Abschlussstegs 30 eine schwierige Aufgabe während der Herstellung des Rotorblatts 6 ist, können Fehler bei der Positionierung (Fig. 10) passieren. Diese Fehler können in der Beschneidung von sensiblen Teilen dieser Struktur (Fig. 10a) oder in großen Klebelücken (Fig. 10b) resultieren. In einem Versuch, einen weichen Übergang zwischen der Rotorblattschale 22 und dem Abschlusssteg 30 zu erhalten, wird ein Teil des Hinterkantenfüllers 66 und des inneren und äußeren Laminats 38, 40 beschnitten. Die Schnittlinie ist durch die gestrichelte Linie gezeigt. Die Länge des Hinterkantenfüllers 66 ist ausreichend, um eine gute Kontaktfläche zwischen der Rotorblattschale 22 und dem Abschlusssteg 30 über den erlaubten Bereich der Positionierungstoleranz zu erreichen, während das Beschneiden von sensiblen strukturellen Elementen vermieden wird. Der beschnittene Teil 72 wird während des abschließenden Beschneidens des Rotorblatts 6 beseitigt.

Merkmale, welche mit dem Wort "insbesondere" oder "im Wesentlichen" kombiniert sind, sind als bevorzugte Ausgestaltungen zu verstehen.

### Bezugszeichenliste

- 2: Windenergieanlage
- 4: Rotor
- 6: Rotorblatt
- 8: Blattwurzel
- 10: Rotornabe
- 12: Blattspitze
- 14: Vorderkante
- 16: Hinterkante
- 18: Druckseite
- 20: Saugseite
- 22: Druckseitenschale
- 24: Saugseitenschale
- 26: Wurzelbereich
- 28: Rotorblattprofil
- 30: Abschlusssteg
- 32: Klebeflansch
- 34: Klebefläche
- 36: Innenfläche
- 38: Inneres Laminat
- 40: Äußeres Laminat
- 42: Hinterkantengurt
- 44: Klebepaste
- 46: Kern
- 48: Faserschicht
- 50: Oberfläche des Kerns
- 52: Inneres Laminat
- 54: Äußeres Laminat
- 56: Stegfüller
- 58: Weitere zusätzliche Faserschicht
- 60: Endpunktfaserverstärkungsschicht
- 62: Kantenteil
- 64: Stirnseite
- 66: Hinterkantenfüller
- 68: Verbindungsfläche
- 70: Klebepaste
- 72: entfernter Teil

- L: Longitudinale Richtung
- IN: Inneres des Rotorblatts
- R: Radius

## Patentansprüche

1. Rotorblatt (6) einer Windenergieanlage (2), wobei das Rotorblatt (6) eine Vorderkante (14) und eine Hinterkante (16) aufweist und sich das Rotorblatt (6) zwischen einer Blattwurzel (8) und einer Blattspitze (12) erstreckt, wobei das Rotorblatt (6) eine Saugseitenschale (24) und eine Druckseitenschale (22) aufweist, welche sich beide zwischen der Blattwurzel (8) und der Blattspitze (12) erstrecken, wobei die Schalen (22, 24) an der Vorderkante (14) und wenigstens teilweise an der Hinterkante (16) verbunden sind, wobei das Rotorblatt (6) des Weiteren einen Abschlusssteg (30) aufweist, welcher zwischen der Saugseitenschale (24) und der Druckseitenschale (22) an der Hinterkante (16) in einem Wurzelbereich (26) des Rotorblatts (6) angeordnet ist, wobei der Wurzelbereich (26) die Blattwurzel (8) einschließt, wobei der Abschlusssteg (30) eine dicke Hinterkante des Rotorblatts (6) in dem Wurzelbereich (26) bereitstellt, und wobei der Abschlusssteg (30) einen Klebeflansch (32) mit einer Klebefläche (34) aufweist, welche einer Innenfläche (36) der Saugseitenschale (24) oder der Druckseitenschale (22) zugewandt ist, wobei der Abschlusssteg (30) ein Faserverbundteil mit einem Kern (46) und Faserschichten (48), welche sich entlang der Oberfläche (50) des Kerns (46) erstrecken, ist, wobei ein Teil der Faserschichten (48) über den Kern (46) hinaus übersteht und den Klebeflansch (32) bildet, wobei wenigstens die Saugseitenschale (24) und/oder die Druckseitenschale (22) einen direkt benachbart zum Kern oder zum Kernlaminat der Schale angeordneten Hinterkantenfüller (66) aufweist, welcher wenigstens teilweise eine geometrische Kontur einer Verbindungsfläche (68) der Schale (22, 24) definiert, wobei diese Verbindungsfläche (68) eine Fügefläche mit der Klebefläche (34) des Klebeflanschs (32) in der Verbindung zwischen dem Abschlusssteg (30) und der Schale (22, 24) ist, wobei der Abschlusssteg vorgefertigt und/oder der Klebeflansch mittels Faserschichten, welche auf beiden Seiten des Kerns des Abschlussstegs angeordnet sind, gebildet ist.

2. Rotorblatt (6) gemäß Anspruch 1, wobei ein Verstärkungsbauteil mit dem Abschlusssteg (30) und dem Klebeflansch (32) verbunden ist, sodass es einem Inneren (IN) des Rotorblatts (6) zugewandt ist.

3. Rotorblatt (6) gemäß Anspruch 2, wobei das Verstärkungsbauteil eine zusätzliche Faserschicht ist, welche sich an einer Innenfläche des Abschlussstegs (30) und des Klebeflanschs (32) erstreckt.

4. Rotorblatt (6) gemäß Anspruch 2 oder 3, wobei das Verstärkungsbauteil ein Stegfüller (56) ist, welcher in einer Ecke zwischen der Innenfläche des Abschlussstegs (30) und einer Innenfläche des Klebeflanschs (32) angeordnet ist, wobei sich insbesondere eine weitere zusätzliche Faserschicht (58) an einer Innenfläche des Abschlussstegs (30), einer Innenfläche des Stegfüllers (56) und einer Innenfläche des Klebeflanschs (32) erstreckt.

5. Rotorblatt (6) gemäß einem der vorhergehenden Ansprüche, wobei der Abschlusssteg (30) wenigstens eine Endpunktfaserverstärkungsschicht (60) aufweist, welche sich um einen Kantenteil (62) des Kerns (46) herum erstreckt, dieser Kantenteil (62) eine Stirnfläche (64) aufweist, welche einer Innenfläche (36) der Saugseitenschale (24) oder der Druckseitenschale (22) zugewandt ist.

6. Verwendung eines Abschlussstegs (30) zum Herstellen eines Rotorblatts (6) einer Windenergieanlage (2) gemäß einem der vorhergehenden Ansprüche, wobei der Abschlusssteg (30) dazu eingerichtet ist, zwischen der Saugseitenschale (24) und der Druckseitenschale (22) an der Hinterkante (16) in einem Wurzelbereich (26) des Rotorblatts (6) angeordnet zu sein, wobei der Wurzelbereich (26) die Blattwurzel (8) einschließt, wobei der Abschlusssteg (30) eine dicke Hinterkante des Rotorblatts (6) in dem Wurzelbereich (26) bereitstellt, wobei der Abschlusssteg (30) einen Klebeflansch (32) mit einer Klebefläche (34) aufweist, welche einer Innenfläche (36) der Saugseitenschale (24) oder der Druckseitenschale (22) zuwendbar ist, wobei der Abschlusssteg (30) ein Faserverbundteil mit einem Kern (46) und Faserschichten (48), welche sich entlang der Oberfläche (50) des Kerns (46) erstrecken, ist, wobei ein Teil der Faserschichten (48) über den Kern (46) hinaus übersteht und den Klebeflansch (32) bildet.

7. Verfahren zum Herstellen eines Rotorblatts (6) einer Windenergieanlage (2), wobei das Rotorblatt (6) eine Vorderkante (14) und eine Hinterkante (16) aufweist und sich das Rotorblatt (6) zwischen einer Blattwurzel (8) und einer Blattspitze (12) erstreckt, wobei das Rotorblatt (6) eine Saugseitenschale (24) und eine Druckseitenschale (22) aufweist, welche sich beide zwischen der Blattwurzel (8) und der Blattspitze (12) erstrecken, wobei das Rotorblatt (6) durch Verbinden der Schalen (22, 24) an der Vorderkante (14) und wenigstens teilweise an der Hinterkante (16) hergestellt wird, und wobei das Rotorblatt (6) des Weiteren einen Abschlusssteg (30) aufweist, welcher zwischen der Saugseitenschale (24) und der Druckseitenschale (22) an der Hinterkante (16) in einem Wurzelbereich (26) des Rotorblatts (6) angeordnet ist, wobei der Wurzelbereich (26) die Blattwurzel (8) einschließt, wobei der Abschlusssteg (30) eine dicke Hinterkante des Rotorblatts (6) in dem Wurzelbereich (26) bereitstellt, wobei der Abschlusssteg (30) einen Klebeflansch (32) mit einer Klebefläche (34) aufweist, welche einer Innenfläche (36) der Saugseitenschale (24) oder der Druckseitenschale (22) zugewandt ist, wobei der Abschlusssteg (30) vorgefertigt ist und der Abschlusssteg (30) ein Faserverbundteil mit einem Kern (46) und Faserschichten (48) ist, wobei die Faserschichten (48) angeordnet werden, sodass sie sich an einer Oberfläche (50) des Kerns (46) erstrecken und ein Teil der Faserschichten (48) über den Kern (46) hinaus übersteht, um den Klebeflansch (32) zu bilden, wobei die Klebefläche (34) mit der Innenfläche (36) der Schale (22, 24) mittels einer Klebepaste (70) verbunden ist, wobei ein Füllerelement (66) in wenigstens der Saugseitenschale (24) und/oder der Druckseitenschale (22) eingebracht und direkt benachbart zum Kern oder zum Kernlaminat der Schale angeordnet ist, sodass es wenigstens teilweise eine geometrische Kontur einer Verbindungsfläche (68) der Schalen (22, 24) definiert, wobei diese Verbindungsfläche (68) eine Fügefläche mit der Klebefläche (34) des Klebeflanschs (32) in der Verbindung zwischen dem Abschlusssteg (30) und der Schale (22, 24) ist.

8. Verfahren gemäß Anspruch 7, wobei eine Verbindung zwischen dem Abschlusssteg (30) und dem Klebeflansch (32) durch Anordnen eines Verstärkungsbauteils an dem Abschlusssteg (30) und dem Klebeflansch (32) verstärkt wird, sodass es einem Inneren (IN) des Rotorblatts (6) zugewandt ist.

9. Verfahren gemäß Anspruch 8, wobei die Verbindung zwischen den Abschlussstegen (30) und dem Klebeflansch (32) durch Anordnen einer zusätzlichen Faserschicht, welche sich an einer Innenfläche des Abschlussstegs (30) und des Klebeflanschs (32) erstreckt, verstärkt wird.

10. Verfahren gemäß Anspruch 8 oder 9, wobei die Verbindung zwischen dem Abschlusssteg und dem Klebeflansch durch Anordnen eines Stegfüllers (56) in einer Ecke zwischen einer Innenfläche des Abschlussstegs (30) und einer Innenfläche des Klebeflanschs (32) verstärkt wird, wobei insbesondere eine weitere zusätzliche Faserschicht (58) an der Innenfläche des Abschlussstegs (30), der Innenfläche des Stegfüllers (56) und einer Innenfläche des Klebeflanschs (32) angeordnet ist.

11. Verfahren gemäß einem der Ansprüche 7 bis 10, wobei der Abschlusssteg (30) ein Faserverbundteil ist, welches einen Kern (46) aufweist, wobei wenigstens eine Endpunktfaserverstärkungsschicht (60) angeordnet ist, sodass sie sich um den Kantenteil (62) des Kerns (46) herum erstreckt, wobei dieser Kantenteil (62) eine Stirnfläche (64) aufweist, welcher einer Innenfläche (36) der Saugseitenschale (24) oder der Druckseitenschale (22) zugewandt ist.

## Claims

1. A rotor blade (6) of a wind energy installation (2), wherein the rotor blade (6) has a leading edge (14) and a trailing edge (16), and the rotor blade (6) extends between a root (8) of the blade and a tip (12) of the blade, wherein the rotor blade (6) has a suction side shell (24) and a pressure side shell (22), which both extend between the root (8) of the blade and the tip (12) of the blade, wherein the shells (22, 24) are connected at the leading edge (14) and at least partially at the trailing edge (16), wherein the rotor blade (6) further comprises a termination web (30) which is disposed between the suction side shell (24) and the pressure side shell (22) at the trailing edge (16) in a region (26) of the root of the rotor blade (6), wherein the region (26) of the root includes the root (8) of the blade, wherein the termination web (30) provides a thick trailing edge of the rotor blade (6) in the region (26) of the root, and wherein the termination web (30) comprises a bonding flange (32) with a bonding surface (34) which faces towards an inner surface (36) of the suction side shell (24) or the pressure side shell (22), wherein the termination web (30) is a fibre composite member which has a core (46) and fibre layers (48) which extend along the surface (50) of the core (46), wherein a portion of the fibre layers (48) project beyond the core (46) and form the bonding flange (32), wherein at least the suction side shell (24) and/or the pressure side shell (22) has a trailing edge filler (66) which is disposed directly adjacent to the core or directly adjacent to the core laminate of the shell and which at least partially defines a geometric contour of a joining surface (68) of the shell (22, 24), wherein said joining surface (68) is a mating surface with the bonding surface (34) of the bonding flange (32) in the joint between the termination web (30) and the shell (22, 24), wherein the termination web is prefabricated and/or the bonding flange is formed by means of fibre layers which are arranged on both sides of the core of the termination web.

2. The rotor blade (6) according to claim 1, wherein a reinforcement member is connected to the termination web (30) and the bonding flange (32) in such a way that it faces an interior (IN) of the rotor blade (6).

3. The rotor blade (6) according to claim 2, wherein the reinforcement member is an additional fibre layer which extends on an inner surface of the termination web (30) and the bonding flange (32).

4. The rotor blade (6) according to claim 2 or 3, wherein the reinforcement member is a web filler (56) which is disposed in a corner between the inner surface of the termination web (30) and an inner surface of the bonding flange (32), in particular wherein a further, additional fibre layer (58) extends on an inner surface of the termination web (30), an inner surface of the web filler (56) and an inner surface of the bonding flange (32).

5. The rotor blade (6) according to any one of the preceding claims, wherein the termination web (30) comprises at least one end point fibre reinforcement layer (60) which extends around an edge portion (62) of the core (46), wherein said edge portion (62) has an end face (64) which faces towards an inner surface (36) of the suction side shell (24) or the pressure side shell (22).

6. Use of a termination web (30) for the manufacture of a rotor blade (6) of a wind energy installation (2) according to any one of the preceding claims, wherein the termination web (30) is adapted to be disposed between the suction side shell (24) and the pressure side shell (22) at the trailing edge (16) in a region (26) of the root of the rotor blade (6), wherein the region (26) of the root includes the root (8) of the blade, wherein the termination web (30) provides a thick trailing edge of the rotor blade (6) in the region (26) of the root, wherein the termination web (30) comprises a bonding flange (32) with a bonding surface (34) which can be caused to face towards an inner surface (36) of the suction side shell (24) or the pressure side shell (22), wherein the termination web (30) is a fibre composite member which has a core (46) and fibre layers (48) which extend along the surface (50) of the core (46), wherein a portion of the fibre layers (48) project beyond the core (46) and form the bonding flange (32).

7. A method of manufacturing a rotor blade (6) of a wind energy installation (2), wherein the rotor blade (6) has a leading edge (14) and a trailing edge (16), and the rotor blade (6) extends between a root (8) of the blade and a tip (12) of the blade, wherein the rotor blade (6) has a suction side shell (24) and a pressure side shell (22), which both extend between the root (8) of the blade and the tip (12) of the blade, wherein the rotor blade (6) is manufactured by joining the shells (22, 24) at the leading edge (14) and at least partially at the trailing edge (16), and wherein the rotor blade (6) further comprises a termination web (30) which is disposed between the suction side shell (24) and the pressure side shell (22) at the trailing edge (16) in a region (26) of the root of the rotor blade (6), wherein the region (26) of the root includes the root (8) of the blade, wherein the termination web (30) provides a thick trailing edge of the rotor blade (6) in the region (26) of the root, wherein the termination web (30) comprises a bonding flange (32) with a bonding surface (34) which faces towards an inner surface (36) of the suction side shell (24) or the pressure side shell (22), wherein the termination web (30) is prefabricated and wherein the termination web (30) is a fibre composite member which has a core (46) and fibre layers (48), wherein the fibre layers (48) are arranged in such a way that they extend on the surface (50) of the core (46) and so that a portion of the fibre layers (48) project beyond the core (46) in order to form the bonding flange (32), wherein the bonding surface (34) is bonded to the inner surface (36) of the shell (22, 24) by means of an adhesive paste (70), wherein a filler element (66) is introduced in at least one of the suction side shell (24) and the pressure side shell (22) and is arranged directly adjacent to the core or the core laminate of the shell so that it at least partially defines a geometric contour of a joining surface (68) of the shells (22, 24), wherein said joining surface (68) is a mating surface with the bonding surface (34) of the bonding flange (32) in the joint between the termination web (30) and the shell (22, 24).

8. The method according to claim 7, wherein a connection between the termination web (30) and the bonding flange (32) is reinforced by arranging a reinforcement member on the termination web (30) and the bonding flange (32) so that it faces towards an interior (IN) of the rotor blade (6).

9. The method according to claim 8, wherein the connection between the termination webs (30) and the bonding flange (32) is reinforced by arranging an additional fibre layer which extends on an inner surface of the termination web (30) and the bonding flange (32).

10. The method according to claim 8 or 9, wherein the connection between the termination web and the bonding flange is reinforced by arranging a web filler (56) in a corner between an inner surface of the termination web (30) and an inner surface of the bonding flange (32), in particular wherein a further, additional fibre layer (58) is arranged on the inner surface of the termination web (30), the inner surface of the web filler (56) and an inner surface of the bonding flange (32).

11. The method according to any one of the claims 7 to 10, wherein the termination web (30) is a fibre composite member which comprises a core (46), wherein at least one end point fibre reinforcement layer (60) is arranged in such a way that it extends around the edge portion (62) of the core (46), wherein said edge portion (62) has an end face (64) which faces towards an inner surface (36) of the suction side shell (24) or the pressure side shell (22).

## Revendications

1. Pale de rotor (6) d'une éolienne (2), dans laquelle la pale de rotor (6) présente un bord d'attaque (14) et un bord de fuite (16) et la pale de rotor (6) s'étend entre un pied de pale (8) et une pointe de pale (12), dans laquelle la pale de rotor (6) présente une paroi d'extrados (24) et une paroi d'intrados (22) qui s'étendent toutes les deux entre le pied de pale (8) et la pointe de pale (12), dans laquelle les pales (22, 24) sont reliées au niveau du bord d'attaque (14) et au moins partiellement au niveau du bord de fuite (16), dans laquelle la pale de rotor (6) présente de plus une traverse terminale (30) qui est agencée entre la paroi d'extrados (24) et la paroi d'intrados (22) au niveau du bord de fuite (16) dans une zone de pied (26) de la pale de rotor (6), dans laquelle la zone de pied (26) entoure le pied de pale (8), dans laquelle la traverse terminale (30) fournit un bord de fuite épais de la pale de rotor (6) dans la zone de pied (26), et dans laquelle la traverse terminale (30) présente une bride adhésive (32) avec une surface adhésive (34) qui est tournée vers une surface intérieure (36) de la paroi d'extrados (24) ou de la paroi d'intrados (22), dans laquelle la traverse terminale (30) est une partie composite fibreuse avec une âme (46) et des couches de fibre (48) qui s'étendent le long de la surface (50) de l'âme (46), dans laquelle une partie des couches de fibre (48) dépasse au-delà de l'âme (46) et forme la bride adhésive (32), dans laquelle au moins la paroi d'extrados (24) et/ou la paroi d'intrados (22) présente une charge de bord de fuite (66) agencée directement de manière contigüe à l'âme ou au stratifié d'âme de la paroi qui définit au moins partiellement un contour géométrique d'une surface de liaison (68) de la paroi (22, 24), dans laquelle cette surface de liaison (68) est une surface d'assemblage avec la surface adhésive (34) de la bride adhésive (32) en liaison entre la traverse terminale (30) et la paroi (22, 24), dans laquelle la traverse terminale est préfabriquée et/ou la bride adhésive est formée au moyen de couches de fibre qui sont agencées sur les deux côtés de l'âme de la traverse terminale.

2. Pale de rotor (6) selon la revendication 1, dans laquelle un composant de renforcement est relié à la traverse terminale (30) et à la bride adhésive (32) de sorte qu'il soit tourné vers un intérieur (IN) de la pale de rotor (6).

3. Pale de rotor (6) selon la revendication 2, dans laquelle le composant de renforcement est une couche de fibre supplémentaire qui s'étend au niveau d'une surface intérieure de la traverse terminale (30) et de la bride adhésive (32).

4. Pale de rotor (6) selon la revendication 2 ou 3, dans laquelle le composant de renforcement est une charge de traverse (56) qui est agencée dans un coin entre la surface intérieure de la traverse terminale (30) et une surface intérieure de la bride adhésive (32), dans laquelle en particulier une autre couche de fibre supplémentaire (58) s'étend au niveau d'une surface intérieure de la traverse terminale (30), d'une surface intérieure de la charge de traverse (56) et d'une surface intérieure de la bride adhésive (32).

5. Pale de rotor (6) selon l'une quelconque des revendications précédentes, dans laquelle la traverse terminale (30) présente au moins une couche de renforcement de fibre de point terminal (60) qui s'étend autour d'une partie de bord (62) de l'âme (46), cette partie de bord (62) présente une surface avant (64) qui est tournée vers une surface intérieure (36) de la paroi d'extrados (24) ou de la paroi d'intrados (22).

6. Utilisation d'une traverse terminale (30) pour la fabrication d'une pale de rotor (6) d'une éolienne (2) selon l'une quelconque des revendications précédentes, dans laquelle la traverse terminale (30) est conçue afin d'être agencée entre la paroi d'extrados (24) et la paroi d'intrados (22) au niveau du bord de fuite (16) dans une zone de pied (26) de la pale de rotor (6), dans laquelle la zone de pied (26) entoure le pied de pale (8), dans laquelle la traverse terminale (30) fournit un bord de fuite épais de la pale de rotor (6) dans la zone de pied (26), dans laquelle la traverse terminale (30) présente une bride adhésive (32) avec une surface adhésive (34) qui peut être tournée vers une surface intérieure (36) de la paroi d'extrados (24) ou de la paroi d'intrados (22), dans laquelle la traverse terminale (30) est une partie composite de fibre avec une âme (46) et des couches de fibre (48) qui s'étendent le long de la surface (50) de l'âme (46), dans laquelle une partie des couches de fibre (48) dépasse au-delà de l'âme (46) et forme la bride adhésive (32).

7. Procédé de fabrication d'une pale de rotor (6) d'une éolienne (2), dans lequel la pale de rotor (6) présente un bord d'attaque (14) et un bord de fuite (16) et la pale de rotor (6) s'étend entre un pied de pale (8) et une pointe de pale (12), dans lequel la pale de rotor (6) présente une paroi d'extrados (24) et une paroi d'intrados (22) qui s'étendent toutes les deux entre le pied de pale (8) et la pointe de pale (12), dans lequel la pale de rotor (6) est fabriquée par liaison des parois (22, 24) au niveau du bord d'attaque (14) et au moins partiellement au niveau du bord de fuite (16), et dans lequel la pale de rotor (6) présente de plus une traverse terminale (30) qui est agencée entre la paroi d'extrados (24) et la paroi d'intrados (22) au niveau du bord de fuite (16) dans une zone de pied (26) de la pale de rotor (6), dans lequel la zone de pied (26) entoure le pied de pale (8), dans lequel la traverse terminale (30) fournit un bord de fuite épais de la pale de rotor (6) dans la zone de pied (26), dans lequel la traverse terminale (30) présente une bride adhésive (32) avec une surface adhésive (34) qui est tournée vers une surface intérieure (36) de la paroi d'extrados (24) ou de la paroi d'intrados (22), dans lequel la traverse terminale (30) est préfabriquée et la traverse terminale (30) est une partie composite de fibre avec une âme (46) et des couches de fibre (48), dans lequel les couches de fibre (48) sont agencées de sorte qu'elles s'étendent au niveau d'une surface (50) de l'âme (46) et une partie des couches de fibre (48) dépasse au-delà de l'âme (46) afin de former la bride adhésive (32), dans lequel la surface adhésive (34) est reliée à la surface intérieure (36) de la paroi (22, 24) au moyen d'une pâte adhésive (70), dans lequel un élément de charge (66) est introduit dans au moins la paroi d'extrados (24) et/ou la paroi d'intrados (22) et est agencé directement de manière contigüe à l'âme ou au stratifié d'âme de la paroi de sorte qu'elle définisse au moins partiellement un contour géométrique d'une surface de liaison (68) des parois (22, 24), dans lequel cette surface de liaison (68) est une surface d'assemblage avec la surface adhésive (34) de la bride adhésive (32) en liaison entre la traverse terminale (30) et la paroi (22, 24).

8. Procédé selon la revendication 7, dans lequel une liaison entre la traverse terminale (30) et la bride adhésive (32) est renforcée par agencement d'un composant de renforcement au niveau de la traverse terminale (30) et la bride adhésive (32) de sorte qu'il soit tourné vers un intérieur (IN) de la pale de rotor (6).

9. Procédé selon la revendication 8, dans lequel la liaison entre les traverses terminales (30) et la bride adhésive (32) est renforcée par agencement d'une couche de fibre supplémentaire qui s'étend au niveau d'une surface intérieure de la traverse terminale (30) et de la bride adhésive (32).

10. Procédé selon la revendication 8 ou 9, dans lequel la liaison entre la traverse terminale et la bride adhésive est renforcée par agencement d'une charge de traverse (56) dans un coin entre une surface intérieure de la traverse terminale (30) et une surface intérieure de la bride adhésive (32), dans lequel en particulier une autre couche de fibre supplémentaire (58) est agencée au niveau de la surface intérieure de la traverse terminale (30), de la surface intérieure de la charge de traverse (56) et d'une surface intérieure de la bride adhésive (32).

11. Procédé selon l'une quelconque des revendications 7 à 10, dans lequel la traverse terminale (30) est une partie composite de fibre qui présente une âme (46), dans lequel au moins une couche de renforcement de fibre de point final (60) est agencée de sorte qu'elle s'étende autour de la partie de bord (62) de l'âme (46), dans lequel cette partie de bord (62) présente une surface avant (64) qui est tournée vers une surface intérieure (36) de la paroi d'extrados (24) ou de la paroi d'intrados (22).
